(19) **Europäisches Patentamt / European Patent Office / Office européen des brevets**

(11) **EP 3 433 575 B1**

(12) **FASCICULE DE BREVET EUROPEEN**

(45) Date de publication et mention
de la délivrance du brevet:
**15.04.2020 Bulletin 2020/16**

(21) Numéro de dépôt: **17716579.2**

(22) Date de dépôt: **23.03.2017**

(51) Int Cl.:
*G01B 11/255* (2006.01)     *G01M 5/00* (2006.01)
*G01N 3/00* (2006.01)     *G01B 11/16* (2006.01)
*G01L 1/24* (2006.01)

(86) Numéro de dépôt international:
**PCT/FR2017/050685**

(87) Numéro de publication internationale:
**WO 2017/162992 (28.09.2017 Gazette 2017/39)**

(54) **CAPTEUR DE COURBURE A FIBRE OPTIQUE ET DISPOSITIF DE MESURE COMPRENANT LEDIT CAPTEUR**

FASEROPTISCHER BIEGUNGSSENSOR UND MESSVORRICHTUNG MIT DIESEM SENSOR

OPTICAL FIBRE CURVATURE SENSOR AND MEASUREMENT DEVICE COMPRISING SAID SENSOR

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **23.03.2016 FR 1652495**

(43) Date de publication de la demande:
**30.01.2019 Bulletin 2019/05**

(73) Titulaires:
• **Université de Nantes
44000 Nantes (FR)**
• **CENTRE NATIONAL DE LA RECHERCHE
SCIENTIFIQUE
75016 Paris (FR)**

(72) Inventeurs:
• **GUYARD, Romain
44200 Nantes (FR)**
• **LECIEUX, Yann
44100 Nantes (FR)**
• **LEDUC, Dominique
44000 Nantes (FR)**
• **LUPI, Cyril
44300 Nantes (FR)**

(74) Mandataire: **Novagraaf Technologies
12 place des Halles Saint Louis
56100 Lorient (FR)**

(56) Documents cités:
| | |
|---|---|
| WO-A1-2013/131197 | CN-Y- 201 382 777 |
| US-A1- 2003 086 647 | US-A1- 2007 156 019 |
| US-A1- 2009 290 160 | US-A1- 2009 297 089 |

EP 3 433 575 B1

## Description

### Domaine technique

La présente invention se rapporte au domaine de la mesure de la courbure d'une structure au moyen d'une fibre optique. L'invention concerne plus particulièrement un capteur de courbure à fibre optique et un dispositif de mesure comprenant ledit capteur. L'invention trouve notamment des applications dans le domaine de l'énergie pour la mesure de courbure de câbles, tels que des câbles sous-marins, dans le domaine de la robotique pour la mesure de courbure de bras robots ou dans le domaine médical pour la mesure de courbure d'ombilicaux d'endoscopes.

### Etat de la technique

On connaît un certain nombre de capteurs de courbure à fibre optique. Le capteur est placé sur l'élément dont le rayon de courbure est à mesurer de manière à ce que la fibre optique du capteur épouse la forme dudit élément. La mesure du rayon de courbure revient alors à mesurer le rayon de courbure de la fibre optique.

Certains capteurs à fibre optique sont basés sur la création d'une zone de défaut dans la fibre optique généralement obtenue par polissage de la gaine. Cette zone induit des pertes d'intensité lorsqu'elle est courbée, pertes qui dépendent du rayon de courbure. La détermination des pertes permet alors de déterminer le rayon de courbure de la fibre optique.

Une autre technique consiste à mesurer des interférences intermodales tirant partie de la sensibilité des modes de gaine à la courbure. Cette technique nécessite toutefois des architectures complexes, à savoir une fibre micro-structurée inscrite dans une zone étirée soudée entre deux fibres optiques. Enfin, d'autres méthodes sont basées sur l'utilisation de réseaux d'indice fibrés tels qu'un réseau de Bragg ou un réseau à longue période. Ces deux types de réseaux sont des réseaux inscrits dans la fibre optique. Ils diffèrent par leur pas qui est de quelques centaines de nanomètres pour un réseau de Bragg et de quelques dizaines voire centaines de micromètres pour un réseau à longue période. WO 2013/131197 A1, US 2009/297089 A1, CN 201 382 777 Y, US 2009/290160 A1, US 2003/086647 A1 and US 2007/156019 A1 décrivent des capteurs à réseau de Bragg.

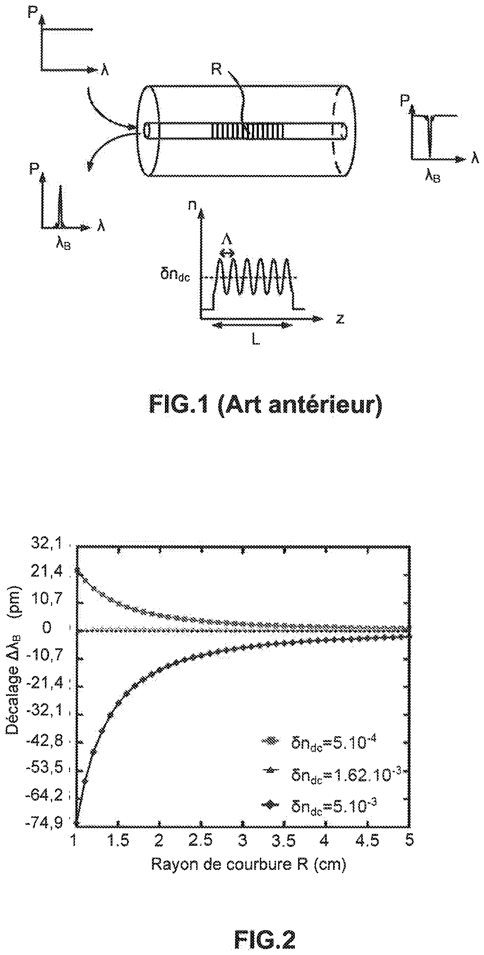

Un capteur à réseau de Bragg est montré à la figure 1. Le réseau de Bragg R est inscrit dans le cœur de la fibre optique. Le réseau de Bragg réfléchit une fréquence spécifique, appelée longueur d'onde de Bragg $\lambda_B$, et transmet toutes les autres fréquences.

Cette longueur d'onde de Bragg $\lambda_B$ est proportionnelle au pas du réseau ($\Lambda$) et à l'indice effectif du cœur de la fibre ($n_{eff}$) :

$$\lambda_B = 2 \cdot n_{eff} \cdot \Lambda \qquad\qquad (1)$$

Toute modification de l'un de ces paramètres déplace proportionnellement la longueur d'onde de Bragg.

Étant donné que la longueur d'onde de Bragg dépend du pas du réseau ($\Lambda$), les réseaux d'indice fibrés peuvent donc être fabriqués pour réfléchir différentes longueurs d'onde de Bragg.

Les variations de contrainte appliquées à la fibre et les variations de température de la fibre affectent à la fois l'indice de réfraction effectif $n_{eff}$ et le pas $\Lambda$ du réseau d'indice fibré, ce qui se traduit par un décalage $\Delta\lambda$ de la longueur d'onde réfléchie. On entend par contrainte tout type de force appliquée à la fibre optique, telle qu'une force de torsion, de compression, de tension ou de courbure.

Le décalage de longueur d'onde $\Delta\lambda$ de la lumière réfléchie par rapport à la longueur d'onde de Bragg $\lambda_B$ dépend donc de la courbure de la fibre optique mais également de la température de la fibre et des autres contraintes appliquées à la fibre optique. Ce décalage de longueur d'onde ne fournit donc pas une mesure directe du rayon de courbure de la fibre optique.

### Résumé de l'invention

Un objet de l'invention est de pallier toute ou partie des inconvénients de l'art antérieur précité.

L'invention est définie dans la revendication indépendante. Les modes particuliers de réalisation de l'invention sont définis dans les revendications dépendantes.

Plus particulièrement, un objet de l'invention est de proposer un capteur de courbure à fibre optique utilisant la technique des réseaux d'indice fibrés mais permettant de déterminer directement le rayon de courbure à partir de longueurs d'onde.

Un autre objet de l'invention est de proposer un capteur de courbure simple à réaliser et présentant un faible encombrement.

A cet effet, l'invention propose un capteur de courbure comprenant:

- au moins une fibre optique comportant un cœur et au moins une première gaine entourant ledit cœur, ledit cœur et la dite au moins une première gaine ayant des indices de réfraction différents, ladite au moins une fibre optique comprenant en outre une extrémité pour recevoir de la lumière polychromatique,
- un premier réseau de modulation périodique longitudinale de l'indice de réfraction du cœur de la fibre optique, appelé premier réseau, inscrit dans le cœur de ladite au moins une fibre optique et configuré pour réfléchir une longueur d'onde $\lambda_1$ de la lumière, ladite longueur d'onde $\lambda_1$ étant décalée d'une quantité $\Delta A_{B1}$ par rapport à une longueur d'onde de référence $\lambda_B$ et la quantité $\Delta\lambda_{B1}$ étant sensible à la température, aux déformations et à la courbure de la fibre optique,
- un deuxième réseau de modulation périodique longitudinale de l'indice de réfraction du cœur de la fibre optique, appelé deuxième réseau, inscrit dans le cœur de ladite au moins une fibre optique et configuré pour réfléchir une longueur d'onde $\lambda_2$ de la lumière, ladite longueur d'onde $\lambda_2$ étant décalée d'une quantité $\Delta\lambda_{B2}$ par rapport à ladite longueur d'onde de référence $\lambda_B$ et la quantité $\Delta\lambda_{B2}$ étant sensible à la température, aux déformations et à la courbure de la fibre optique,

lesdits premier et deuxième réseaux étant définis de sorte que les quantités $\Delta\lambda_{B1}$ et $\Delta\lambda_{B2}$ présentent des sensibilités à la température et aux déformations sensiblement identiques et des sensibilités à la courbure sensiblement opposées.

Selon l'invention, on a : $\alpha_{T1}=\alpha_{T2}$, $\alpha_{\epsilon1}=\alpha_{\epsilon2}$ et $f_2(R)=-f_1(R)$ si $\alpha_{T1}$ et $\alpha_{T2}$ désignent respectivement la sensibilité du premier réseau à la température et la sensibilité du deuxième réseau à la température, $\alpha_{\epsilon1}$ et $\alpha_{\epsilon2}$ désignent respectivement la sensibilité à la déformation du premier réseau et la sensibilité à la déformation du deuxième réseau et f1(R) et f2(R) désignent respectivement le décalage de longueur d'onde dû à la courbure dans le premier réseau et le décalage de longueur d'onde dû à la courbure dans le deuxième réseau.

Le capteur de l'invention délivre donc des longueurs d'onde réfléchies $\lambda_1 = \lambda_B + \Delta\lambda_{B1}$ et $\lambda_2 = \lambda_B + \Delta\lambda_{B2}$. Les deux réseaux réfléchissant ces longueurs d'onde ayant des comportements identiques par rapport à la température et aux déformations mais opposés par rapport à la courbure, lorsqu'on soustrait ces deux longueurs d'onde, la différence $\Delta\lambda = \lambda_1 - \lambda_2 = \Delta\lambda_{B1} - \Delta\lambda_{B2}$ dépend uniquement de la courbure de la fibre. On peut ainsi déduire directement la courbure des réseaux à partir de la différence $\Delta\lambda$.

Selon un mode de réalisation particulier, le capteur comporte une seule fibre optique et les premier et deuxième réseaux sont des réseaux de Bragg inscrits l'un derrière l'autre dans le cœur de la fibre optique, lesdits premier et deuxième réseaux ayant des indices effectifs moyens différents.

Selon un autre mode de réalisation particulier, le capteur comporte une seule fibre optique et les premier et deuxième réseaux sont inscrits l'un sur l'autre, le premier réseau étant un réseau de Bragg et le deuxième réseau étant un réseau à longue période. Dans ce mode de réalisation, la fibre optique comporte avantageusement une deuxième gaine entourant ladite première gaine, ladite deuxième gaine ayant un indice de réfraction inférieur à l'indice de réfraction de la première gaine.

Selon un autre mode de réalisation, le capteur comporte une seule fibre optique et une pluralité de réseaux de Bragg inscrits l'un derrière l'autre dans le cœur de la fibre optique, ladite pluralité de réseaux de Bragg étant agencés de manière à se comporter comme l'association d'un réseau de Bragg et d'un réseau à longue période. Plus particulièrement, le capteur comporte un réseau de Bragg super-structuré, appelé couramment SFBG pour Superstructured Fiber Bragg Grating en langue anglaise. Pour réaliser ce réseau super-structuré, on inscrit dans le cœur de la fibre une centaine de réseaux de Bragg très courts en série. Tous les réseaux de Bragg sont identiques (même pas, même longueur, même modulation d'indice). Les réseaux sont régulièrement espacés d'une distance $L_{LPG}$. Leur longueur $L_{FBG}$ est une fraction de $L_{LPG}$. La longueur totale de la structure est de l'ordre du centimètre, comme un réseau classique. Cette structure se comporte comme l'association d'un réseau de Bragg de pas $L_{FBG}$ et d'un réseau longue période de pas $L_{LPG}$.

Selon un autre mode de réalisation particulier, le capteur comporte des première et deuxième fibres optiques dans un barreau de résine présentant un axe de symétrie, les premier et deuxième réseaux étant inscrits respectivement dans lesdites première et deuxième fibres optiques. Dans ce mode de réalisation, les premier et deuxième réseaux sont avantageusement inscrits à des positions sensiblement identiques le long dudit axe de symétrie et lesdites première et deuxième fibres optiques sont placées à égales distances dudit axe de symétrie.

Dans ce mode de réalisation à deux fibres optiques, lesdits premier et deuxième réseaux peuvent être des réseaux de Bragg. Selon une variante, lesdits premier et deuxième réseaux sont des réseaux à longue période.

L'invention concerne également un dispositif de mesure de la courbure d'un élément longitudinal, caractérisé en ce qu'il comporte:

- un capteur de courbure tel que défini précédemment, ladite au moins une fibre optique du capteur de courbure étant disposée le long dudit élément,
- une source de lumière polychromatique pour émettre de la lumière à travers ladite au moins une fibre optique, et
- un circuit pour recevoir les longueurs d'onde $\lambda_1 = \lambda_B + \Delta\lambda_{B1}$ et $\lambda_2 = \lambda_B + \Delta\lambda_{B2}$ et déterminer la courbure dudit élément à partir desdites longueurs d'onde.

Ce dispositif permet de délivrer de manière simple une valeur de courbure de l'élément longitudinal.

D'autres avantages pourront encore apparaître à l'homme du métier à la lecture des exemples ci-dessous, illustrés par les figures annexées, donnés à titre illustratif.

**Brève description des figures**

- La figure 1 représente une vue schématique d'un capteur de courbure de l'art antérieur;
- La figure 2 est un schéma représentant l'évolution du décalage de la longueur de Bragg $\Delta\lambda_B$ en fonction du rayon de courbure R pour 3 valeurs d'indice effectif moyen de réseau $\delta n_{dc}$;
- La figure 3 représente une vue schématique d'un capteur de courbure conforme à l'invention;
- La figure 4 représente une vue en section d'une fibre optique du capteur de courbure de l'invention;
- La figure 5 représente le profil d'indice de réfraction de la fibre optique de la figure 4;
- La figure 6 est un schéma représentant l'évolution des décalages $\Delta\lambda_{B1}$ et $\Delta\lambda_{B2}$ des longueurs de Bragg des deux réseaux du capteur de courbure de la figure 3 en fonction de la courbure 1/R;
- La figure 7 est un schéma représentant l'évolution du décalage $\Delta\lambda = \Delta\lambda_{B1} - \Delta\lambda_{B2}$ en fonction de la courbure 1/R;
- La figure 8 est une vue schématique d'un dispositif de mesure de courbure comprenant le capteur de la figure 3.

**Description détaillée de l'invention**

L'invention s'appuie sur le fait que la variation de la longueur résonnante (ou longueur d'onde de Bragg $\lambda_B$) d'un réseau d'indice tel qu'un réseau de Bragg ou un réseau à longue période est régi par l'indice effectif moyen $n_{eff}$ du réseau.

Quand un tel réseau est courbé, la longueur d'onde de résonnance se décale. Le décalage est donné par:

$$\Delta\lambda_B = 2 \cdot (\Delta n_{eff} + \delta n_{dc} \cdot \Delta\kappa_{eff}) \cdot \Lambda \qquad (2)$$

où $\Lambda$ est le pas du réseau, $\Delta n_{eff}$ est la variation de l'indice effectif $n_{eff}$ du cœur de la fibre avec la courbure, $\delta n_{dc}$ est l'indice effectif moyen du réseau et $\Delta\kappa_{eff}$ est la variation du coefficient de couplage $\kappa_{eff}$ du réseau avec la courbure. Ces deux facteurs ne dépendent que de la fibre optique et évoluent dans des sens inverses: $n_{eff}$ augmente quand le rayon de courbure diminue tandis que $\kappa_{eff}$ diminue quand le rayon de courbure diminue. On voit dans la relation (2) que la variation du coefficient de couplage $\Delta\kappa_{eff}$ est multipliée par l'indice effectif moyen $\delta n_{dc}$. Donc, en fonction de ce paramètre, la variation de coefficient de couplage $\Delta\kappa_{eff}$ peut soit être négligeable devant la variation d'indice effectif $\Delta n_{eff}$, soit la compenser ou encore être bien plus grande que celle-ci. On peut déduire de ce qui précède que la variation de longueur d'onde de résonance $\Delta\lambda_B$ peut être soit négative, soit nulle ou positive, comme cela est illustré sur la figure 2 pour un réseau de Bragg. En jouant sur l'indice effectif moyen $\delta n_{dc}$ du réseau, il est possible de fixer le décalage de longueur d'onde $\Delta\lambda_B$ à une valeur négative, nulle ou positive pour un rayon de courbure R donnée.

Dans l'exemple de la figure 2, on obtient un décalage $\Delta\lambda_B$ en fonction du rayon de courbure R qui est:

- positif pour $\delta n_{dc} = 5.10^{-4}$;
- nul pour $\delta n_{dc} = 1.62.10^{-3}$;
- négatif pour $\delta n_{dc} = 5.10^{-3}$.

L'idée de l'invention est donc d'associer deux réseaux d'indice ayant la même sensibilité à la déformation et à la température mais des sensibilités opposées en fonction de la courbure.

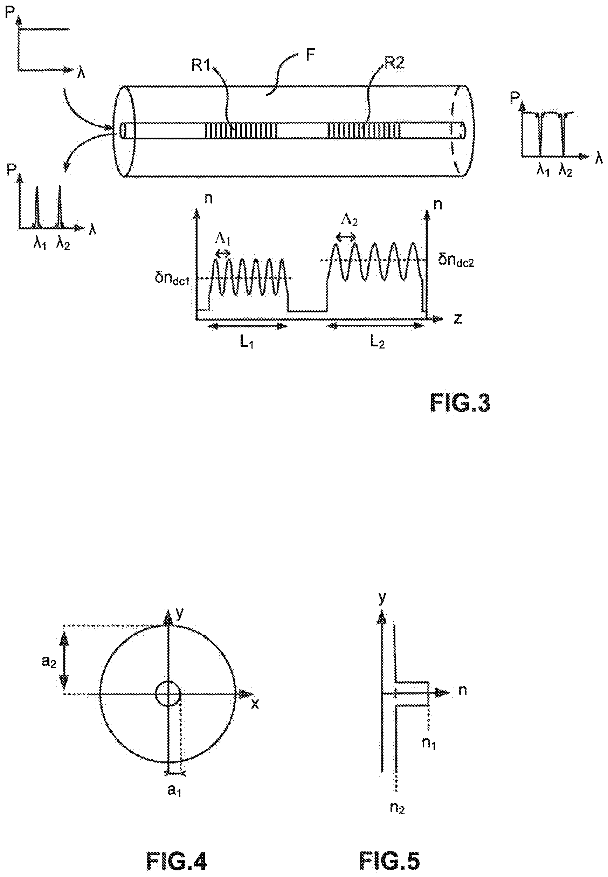

Selon l'invention, le capteur proposé comporte donc deux réseaux d'indice fibrés présentant la même sensibilité à la température et aux déformations mais des réponses opposées en fonction du rayon de courbure. Un schéma de principe de ce capteur est représenté à la figure 3.

En référence à la figure 3, le capteur comporte deux réseaux de Bragg R1 et R2 disposés en série sur une fibre optique F. Les deux réseaux sont photoinscrits dans le cœur de la fibre optique. Ces deux réseaux étant réalisés dans un même matériau, ils présentent la même sensibilité à la température. Les deux réseaux R1 et R2 sont également conçus de façon à présenter la même sensibilité aux déformations (torsion, compression, tension ou étirement) et des réponses opposées à la courbure.

Ainsi, soumis aux mêmes conditions de température, de déformations et de courbure, les deux capteurs R1 et R2 réagissent de la manière suivante :

$$\begin{cases} \Delta\lambda_{B1} = \alpha_T T + \alpha_\varepsilon \varepsilon + f(R) \\ \Delta\lambda_{B2} = \alpha_T T + \alpha_\varepsilon \varepsilon - f(R) \end{cases} \qquad (3)$$

où $\Delta\lambda_{B1}$ est la variation de longueur d'onde du réseau R1, $\Delta\lambda_{B2}$ est la variation de longueur d'onde du réseau R2, T est la température de la fibre optique, $\alpha_T$ est la sensibilité du réseau à la température, $\varepsilon$ représente la déformation de la fibre, $\alpha_\varepsilon$ est la sensibilité à la déformation, $+f(R)$ désigne le décalage de longueur d'onde dû à la courbure dans le réseau R1 et $-f(R)$ désigne le décalage de longueur d'onde dû à la courbure dans le réseau R2.

Lorsque le capteur est soumis à une lumière polychromatique, le réseau R1 réfléchit une lumière ayant une longueur d'onde $\lambda_1 = \lambda_B + \Delta\lambda_{B1}$ et le réseau R2 réfléchit une lumière ayant une longueur d'onde $\lambda_2 = \lambda_B + \Delta\lambda_{B2}$.

Si on soustrait les longueurs d'onde réfléchies $\lambda_1$ et $\lambda_2$, on obtient une grandeur $\Delta\lambda$ indépendante de la température et des déformations et qui ne dépend que du rayon de courbure R:

$$\Delta\lambda = \lambda_1 - \lambda_2 = \lambda_B + \Delta\lambda_{B1} - \lambda_B - \Delta\lambda_{B2} = \Delta\lambda_{B1} - \Delta\lambda_{B2} = 2f(R).$$

On peut ainsi obtenir directement le rayon de courbure R à partir du décalage de longueur d'onde $\Delta\lambda$.

La fibre optique F est une fibre monomode et à saut d'indice présentant les caractéristiques suivantes:

- rayon du cœur : $a_1 = 4{,}2\ \mu m$;
- indice du cœur de la fibre: $n_1$;
- rayon extérieur de la gaine: $a_2 = 62{,}5\ \mu m$;
- indice du cœur de la fibre: $n_2$.

Les dimensions et le profil d'indice de la fibre optique sont visibles sur les figures 4 et 5.

L'indice de la gaine $n_2$ est évalué à partir de la relation de Sellmeier appliquée à la silice :

$$n^2(\lambda) = A + \frac{B}{1 - \dfrac{C}{\lambda^2}} + \frac{D}{1 - \dfrac{E}{\lambda^2}} \qquad (4)$$

où A, B, C, D et E sont les coefficients de Sellmeier dépendants de la température par la relation $X = aT + b$, avec T la température exprimée en degré centigrade.

Les coefficients a et b des Sellmeier A, B, C, D et E de la silice sont exprimés dans le tableau suivant:

| Coefficient X=aT+b | a | b |
|---|---|---|
| A | $6{,}90754.10^{-6}$ | $1{,}31552$ |
| B | $2{,}35835.10^{-5}$ | $0{,}788404$ |
| C | $5{,}84758.10^{-7}$ | $1{,}10199.10^{-2}$ |
| D | $5{,}48368.10^{-7}$ | $0{,}91316$ |
| E | $100$ | $0$ |

L'indice du cœur $n_1$ est déduit de l'indice de la gaine $n_2$ par la relation: $n_1 = 1{,}0036\ n_2$.

Le réseau R1 présente une longueur L1 = 8,9 mm, un pas de réseau $\Lambda_1 = 541{,}1$ nm et un indice effectif moyen $\delta n_{dc1} = 1 \cdot 10^{-4} \cdot n_1$. Le réseau R2 présente une longueur L2 = 250 $\mu m$ (micromètres), un pas de réseau $\Lambda_2 = 541{,}4$ nm

et un indice effectif moyen $\delta n_{dc2} = 3,5 \cdot 10^{-3} \cdot n_1$.

Les longueurs d'onde $\lambda_1$ et $\lambda_2$ réfléchies respectivement par les réseaux R1 et R2 (au repos) sont alors: $\lambda_1 = 1565,2$ nm et $\lambda_2 = 1570$ nm.

Ces longueurs d'onde résonnantes sont suffisamment espacées pour éviter toute superposition des résonances ou inversion de leur position dans la gamme de courbure $1/R \in [0 ; 1]$ cm$^{-1}$.

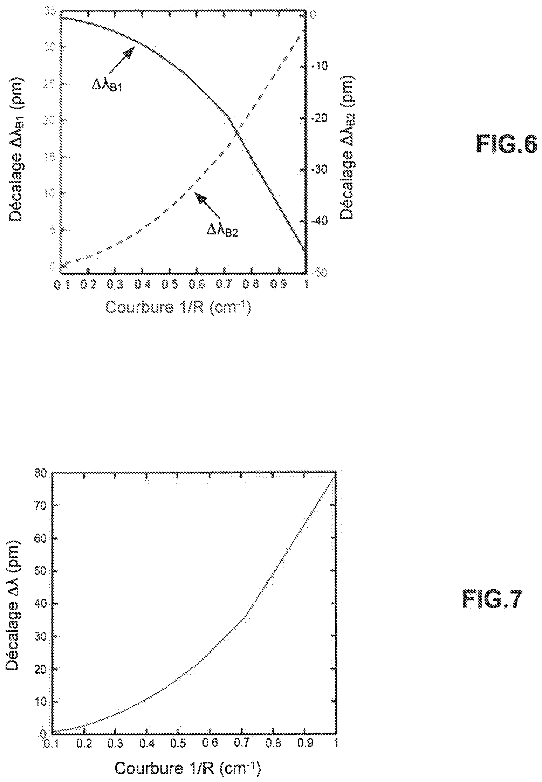

Comme on peut le voir sur la figure 6, le décalage de la longueur d'onde $\Delta\lambda_{B1}$ du réseau R1 décroît avec la courbure de la fibre tandis que le décalage de la longueur d'onde $\Delta\lambda_{B2}$ du réseau R2 suit une courbe opposée.

La sensibilité à la déformation axiale ($\alpha_\varepsilon$) du réseau R1 est identique à celle du réseau R2 et est évaluée à 1, 23 pm/$\mu\varepsilon$ (où 1 $\mu\varepsilon$ correspond à une déformation de $10^{-6}$ m/m). De même, les sensibilités à la température ($\alpha_T$) des deux réseaux R1 et R2 sont sensiblement identiques, de l'ordre de 12,02 pm/°C$^{cent}$.

Il en résulte que la soustraction des deux signaux de longueur d'onde $\lambda_1$ et $\lambda_2$, soit $\Delta\lambda = \lambda_1 - \lambda_2 = \Delta\lambda_{B1} - \Delta\lambda_{B2}$, est indépendante de la température T et des déformations $\varepsilon$ et dépend uniquement de la courbure de la fibre optique. La courbe de la figure 7 illustre la dépendance entre décalage de longueur d'onde $\Delta\lambda$ et la courbure du capteur de la figure 3. La dépendance est non linéaire. La simple mesure du décalage $\Delta\lambda$ permet d'obtenir le rayon de courbure à partir de cette courbe.

Dans le mode de réalisation illustré précédemment, les réseaux R1 et R2 sont des réseaux de Bragg inscrits l'un derrière l'autre dans la fibre optique F. Comme indiqués précédemment, ces deux réseaux ne diffèrent que par leurs indices effectifs moyens ($\delta n_{dc1}$ et $\delta n_{dc2}$), leurs pas ($\Lambda_1$ et $\Lambda_2$) et leurs longueurs ($L_1$ et $L_2$) de manière à ce que leurs dépendances à la courbure soient opposées.

Selon un mode de réalisation en variante, les réseaux R1 et R2 sont respectivement un réseau de Bragg et un réseau longue période inscrits dans le cœur de la fibre optique F l'un sur l'autre. La fibre optique F comporte avantageusement deux gaines. La seconde gaine sert à isoler la lumière qui se propage dans la première gaine du milieu extérieur. Son indice de réfraction est inférieur à celui de la première gaine. Les deux réseaux présentent avantageusement la même longueur. Le réseau à longue période est conçu de façon à ne présenter qu'une résonance dans la gamme spectrale mesurée. Par ailleurs, le mode résonant est choisi de façon à présenter la même sensibilité à la déformation que le réseau de Bragg. Les indices effectifs moyens des deux réseaux sont tels que les réponses des deux réseaux aux courbures sont opposées.

Selon un autre mode de réalisation, le capteur comporte une seule fibre optique et une pluralité de réseaux de Bragg inscrits l'un derrière l'autre dans le cœur de la fibre optique, la pluralité de réseaux de Bragg étant agencés de manière à se comporter comme l'association d'un réseau de Bragg et d'un réseau à longue période.

Plus particulièrement, le capteur comporte un réseau de Bragg super-structuré, appelé couramment SFBG pour Superstructured Fiber Bragg Grating en langue anglaise. Pour réaliser ce réseau super-structuré, on inscrit dans le cœur de la fibre une centaine de réseaux de Bragg très courts en série. Tous les réseaux de Bragg sont identiques (même pas, même longueur, même modulation d'indice). Les réseaux sont régulièrement espacés d'une distance $L_{LPG}$. Leur longueur $L_{FBG}$ est une fraction de $L_{LPG}$. La longueur totale de la structure est de l'ordre du centimètre, comme un réseau classique. Cette structure se comporte comme l'association d'un réseau de Bragg de pas $L_{FBG}$ et d'un réseau longue période de pas $L_{LPG}$.

Selon un autre mode de réalisation en variante, le capteur comporte deux fibres optiques disposées dans un barreau de résine présentant un axe de symétrie. Les deux fibres sont avantageusement placées à égales distances de l'axe de symétrie du barreau. Le réseau R1 est inscrit dans la première fibre et le second réseau est inscrit dans la deuxième fibre. Ils sont avantageusement inscrits à des positions sensiblement identiques le long de l'axe de symétrie. Dans ce mode de réalisation, les réseaux R1 et R2 peuvent être des réseaux de Bragg ou des réseaux à longue période. Dans ce dernier cas, les fibres optiques comportent avantageusement deux gaines. Comme pour les autres modes de réalisation, les indices effectifs moyens des deux réseaux sont sélectionnés pour que les réponses des deux réseaux aux courbures soient opposées.

Comme expliqué précédemment, les longueurs d'onde $\lambda_1$ et $\lambda_2$ issues du capteur permettent de déterminer le rayon de courbure. Ces deux longueurs d'onde doivent donc être reçues et traitées pour obtenir le rayon de courbure. L'invention concerne donc, de manière plus globale, un dispositif de mesure de la courbure d'un élément longitudinal comportant :

- un capteur de courbure selon l'un des modes de réalisation décrits précédemment, la fibre optique du capteur de courbure étant disposée le long de l'élément dont le rayon de courbure est à mesurer,
- une source de lumière polychromatique pour émettre de la lumière à travers la fibre optique du capteur, et
- un circuit pour recevoir les longueurs d'onde $\lambda_1 = \lambda_B + \Delta\lambda_{B1}$ et $X_2 = \lambda_B + \Delta\lambda_{B2}$ issus du capteur de courbure et déterminer la courbure de l'élément à partir desdites longueurs d'onde.

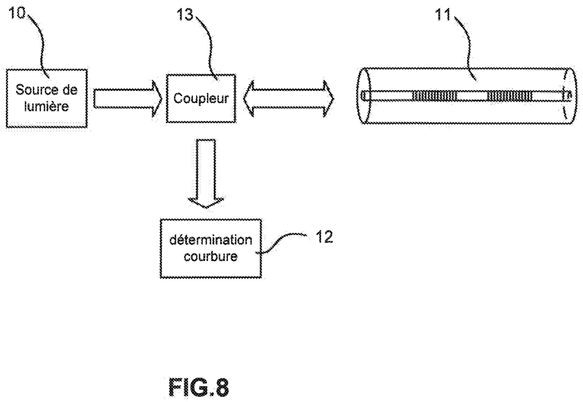

Un tel dispositif est représenté schématiquement à la figure 8. Il comprend une source de lumière blanche ou polychromatique 10, un capteur de courbure 11 tel que défini précédemment pour recevoir la lumière émise par la source 10 et délivrer des longueurs d'onde $\lambda_1$ et $\lambda_2$ correspondant aux longueurs d'onde réfléchies par les réseaux R1 et R2 du capteur, un circuit 12 pour déterminer le rayon de courbure R de l'élément à partir des longueurs d'onde $\lambda_1$ et $\lambda_2$. Un coupleur 13 est employé pour la transmission de la lumière polychromatique de la source 10 vers le capteur 11 et la transmission des longueurs d'onde $\lambda_1$ et $\lambda_2$ du capteur 11 vers le circuit 12. Le circuit est par exemple un interféromètre équipé de moyens de traitement pour réaliser la soustraction $\Delta\lambda = \lambda_1 - \lambda_2$ et en déduire, par exemple au moyen d'une table de correspondance (ou look-up table en langue anglaise), le rayon de courbure R de l'élément.

Bien entendu, il est possible de disposer plusieurs capteurs de courbure conformes à l'invention le long de l'élément, avec des longueurs d'onde résonantes décalées, pour mesurer la courbure en plusieurs points de celui-ci.

Le capteur et le dispositif présentés ici présentent de nombreux avantages:

- simplicité de fabrication;
- simplicité de mise en œuvre,
- encombrement réduit du capteur;
- obtention du rayon de courbure directement à partir d'une différence de longueur d'onde;
- insensibilité aux chutes d'intensité de la lumière émise ou réfléchie.

Par ailleurs, la mesure proposée étant indépendante de la température et de la déformation, l'invention peut être utilisée dans de nombreux domaines, notamment dans des applications où le capteur peut être soumis à des gradients de température, par exemple dans des applications maritimes ou médicales.

L'invention est décrite dans ce qui précède à titre d'exemple. Il est entendu que la personne de l'art est à même de réaliser différentes variantes de réalisation de l'invention, en associant par exemple les différentes caractéristiques ci-dessus prises seules ou en combinaison, sans pour autant sortir du cadre de l'invention.

## Revendications

1. Capteur de courbure comprenant:

   - au moins une fibre optique (F) comportant un cœur et au moins une première gaine entourant ledit cœur, ledit cœur et la dite au moins une première gaine ayant des indices de réfraction différents, ladite au moins une fibre optique comprenant en outre une extrémité pour recevoir de la lumière polychromatique,
   - un premier réseau de modulation périodique longitudinale de l'indice de réfraction du cœur de la fibre optique, appelé premier réseau (R1), inscrit dans le cœur de ladite au moins une fibre optique et configuré pour réfléchir une longueur d'onde $\lambda_1$ de la lumière, ladite longueur d'onde $\lambda_1$ étant décalée d'une quantité $\Delta\lambda_{B1}$ par rapport à une longueur d'onde de référence $\lambda_B$ et ladite quantité $\Delta\lambda_{B1}$ étant sensible à la température, aux déformations et à la courbure de la fibre optique,
   **caractérisé en ce qu'**il comporte en outre au moins un deuxième réseau de modulation périodique longitudinale de l'indice de réfraction du cœur de la fibre optique, appelé deuxième réseau (R2), inscrit dans le cœur de ladite au moins une fibre optique et configuré pour réfléchir une longueur d'onde $\lambda_2$ de la lumière, ladite longueur d'onde $\lambda_2$ étant décalée d'une quantité $\Delta\lambda_{B2}$ par rapport à ladite longueur d'onde de référence $\lambda_B$ et ladite quantité $\Delta\lambda_{B2}$ étant sensible à la température, aux déformations et à la courbure de la fibre optique,
   - lesdits premier et deuxième réseaux étant définis de sorte que les quantités $\Delta\lambda_{B1}$ et $\Delta\lambda_{B2}$ présentent des sensibilités à la température et aux déformations sensiblement identiques et des sensibilités à la courbure sensiblement opposées.

2. Capteur selon la revendication 1, **caractérisé en ce qu'**il comporte une seule fibre optique et **en ce que** les premier et deuxième réseaux (R1,R2) sont des réseaux de Bragg inscrits l'un derrière l'autre dans le cœur de la fibre optique, lesdits premier et deuxième réseaux ayant des indices effectifs moyens ($\delta n_{dc1}$, $\delta n_{dc2}$) différents.

3. Capteur selon la revendication 1, **caractérisé en ce qu'**il comporte une seule fibre optique et **en ce que** les premier et deuxième réseaux (R1,R2) sont inscrits l'un sur l'autre, le premier réseau étant un réseau de Bragg et le deuxième réseau étant un réseau à longue période, lesdits premier et deuxième réseaux ayant des indices effectifs moyens ($\delta n_{dc1}$, $\delta n_{dc2}$) différents.

4. Capteur selon la revendication 3, **caractérisé en ce que** la fibre optique comporte une deuxième gaine entourant ladite première gaine, ladite deuxième gaine ayant un indice de réfraction inférieur de l'indice de réfraction de la première gaine.

**5.** Capteur selon la revendication 1, **caractérisé en ce qu'**il comporte une seule fibre optique et une pluralité de réseaux de Bragg inscrits l'un derrière l'autre dans le cœur de la fibre optique, ladite pluralité de réseaux de Bragg étant agencés de manière à se comporter comme l'association d'un réseau de Bragg et d'un réseau à longue période.

**6.** Capteur selon la revendication 1, **caractérisé en ce qu'**il comporte des première et deuxième fibres optiques dans un barreau de résine présentant un axe de symétrie, les premier et deuxième réseaux étant inscrits respectivement dans lesdites première et deuxième fibres optiques.

**7.** Capteur selon la revendication 6, **caractérisé en ce que** les premier et deuxième réseaux (R1,R2) sont disposés à des positions sensiblement identiques le long dudit axe de symétrie et lesdites première et deuxième fibres optiques sont placées à égales distances dudit axe de symétrie.

**8.** Capteur selon la revendication 6 ou 7, **caractérisé en ce que** lesdits premier et deuxième réseaux (R1,R2) sont des réseaux de Bragg.

**9.** Capteur selon la revendication 6 ou 7, **caractérisé en ce que** lesdits premier et deuxième réseaux (R1,R2) sont des réseaux à longue période.

**10.** Dispositif de mesure de la courbure d'un élément longitudinal, **caractérisé en ce qu'**il comporte:

- un capteur de courbure (11) selon l'une quelconque des revendications 1 à 9, ladite au moins une fibre optique du capteur de courbure étant disposée le long dudit élément,
- une source de lumière (10) polychromatique pour émettre de la lumière à travers ladite au moins une fibre optique, et
- un circuit (12) pour recevoir les longueurs d'onde $\lambda_1 = \lambda_B + \Delta\lambda_{B1}$ et $\lambda_2 = \lambda_B + \Delta\lambda_{B2}$ et déterminer la courbure dudit élément à partir desdites longueurs d'onde.

**Patentansprüche**

**1.** Biegungssensor, umfassend:

- mindestens eine optische Faser (F), aufweisend einen Kern und mindestens einen ersten Mantel, der den Kern umgibt, wobei der Kern und der mindestens eine erste Mantel unterschiedliche Brechungsindizes haben, wobei die mindestens eine optische Faser ferner ein Ende umfasst, um polychromatisches Licht zu empfangen,
- ein erstes Gitter zur periodischen Längsmodulation des Brechungsindex des Kerns der optischen Faser, bezeichnet als erstes Gitter (R1), das in den Kern der mindestens einen optischen Faser eingeschrieben ist und konfiguriert, um eine Wellenlänge $\lambda_1$ des Lichts zu reflektieren, wobei die Wellenlänge $\lambda_1$ in einer Quantität $\lambda_{B1}$ in Bezug auf eine Referenzwellenlänge $\lambda_B$ versetzt ist und die Quantität $\lambda_{B1}$ gegenüber der Temperatur, Deformationen und der Biegung der optischen Faser empfindlich ist,
**dadurch gekennzeichnet, dass** er ferner mindestens ein zweites Gitter zur periodischen Längsmodulation des Brechungsindex des Kerns der optischen Faser aufweist, bezeichnet als zweites Gitter (R2), das in den Kern der mindestens einen optischen Faser eingeschrieben ist und konfiguriert, um eine Wellenlänge $\lambda_2$ des Lichts zu reflektieren, wobei die Wellenlänge $\lambda_2$ in einer Quantität $\lambda_{B2}$ in Bezug auf die Referenzwellenlänge $\lambda_B$ versetzt ist und die Quantität $\lambda_{B2}$ gegenüber der Temperatur, Deformationen und der Biegung der optischen Faser empfindlich ist,
- wobei das erste und zweite Gitter derart definiert sind, dass die Quantitäten $\lambda_{B1}$ und $\lambda_{B2}$ etwa identische Sensibilitäten gegenüber der Temperatur und Deformationen und etwa entgegengesetzte Sensibilitäten gegenüber der Biegung aufweisen.

**2.** Sensor nach Anspruch 1, **dadurch gekennzeichnet, dass** er eine einzige optische Faser aufweist und dass das erste und zweite Gitter (R1, R2) Bragg-Gitter sind, die hintereinander in den Kern der optischen Faser eingeschrieben sind, wobei das erste und zweite Gitter unterschiedliche durchschnittliche effektive Indizes ($\delta n_{dc1}$, $\delta n_{dc2}$) haben.

**3.** Sensor nach Anspruch 1, **dadurch gekennzeichnet, dass** er eine einzige optische Faser aufweist und dass das erste und zweite Gitter (R1, R2) übereinander eingeschrieben sind, wobei das erste Gitter ein Bragg-Gitter ist und das zweite Gitter ein Gitter mit langer Periode ist, wobei das erste und zweite Gitter unterschiedliche durchschnittliche effektive Indizes ($\delta n_{dc1}$, $\delta n_{dc2}$) haben.

4. Sensor nach Anspruch 3, **dadurch gekennzeichnet, dass** die optische Faser einen zweiten Mantel aufweist, der den ersten Mantel umgibt, wobei der zweite Mantel einen Brechungsindex hat, der kleiner als der Brechungsindex des ersten Mantels ist.

5. Sensor nach Anspruch 1, **dadurch gekennzeichnet, dass** er eine einzige optische Faser und eine Vielzahl von Bragg-Gittern aufweist, die hintereinander in den Kern der optischen Faser eingeschrieben sind, wobei die Vielzahl von Bragg-Gittern derart eingerichtet ist, dass sie sich wie der Verband eines Bragg-Gitters und eines Gitters mit langer Periode verhalten.

6. Sensor nach Anspruch 1, **dadurch gekennzeichnet, dass** er eine erste und zweite optische Faser in einem Harzstab aufweist, der eine Symmetrieachse aufweist, wobei das erste und zweite Gitter jeweils in die erste und zweite optische Faser eingeschrieben sind.

7. Sensor nach Anspruch 6, **dadurch gekennzeichnet, dass** das erste und zweite Gitter (R1, R2) an etwa identischen Positionen entlang der Symmetrieachse angeordnet sind und die erste und zweite optische Faser in gleichen Abständen von der Symmetrieachse platziert sind.

8. Sensor nach Anspruch 6 oder 7, **dadurch gekennzeichnet, dass** das erste und zweite Gitter (R1, R2) Bragg-Gitter sind.

9. Sensor nach Anspruch 6 oder 7, **dadurch gekennzeichnet, dass** das erste und zweite Gitter (R1, R2) Gitter mit langer Periode sind.

10. Messvorrichtung der Biegung eines Längselements, **dadurch gekennzeichnet, dass** sie aufweist:

   - einen Biegungssensor (11) nach einem der Ansprüche 1 bis 9, wobei die mindestens eine optische Faser des Biegungssensors entlang des Elements angeordnet ist,
   - eine polychromatische Lichtquelle (10), um Licht durch die mindestens eine optische Faser zu senden, und
   - eine Schaltung (12), um die Wellenlängen $\lambda_1 = \lambda_B + A_{B1}$ und $\lambda_2 = \lambda_B + \lambda_{B2}$ zu empfangen und die Biegung des Elements auf der Basis der Wellenlängen zu bestimmen.

**Claims**

1. Curvature sensor comprising:

   - at least one optical fiber (F) comprising a core and at least one first sheath surrounding said core, said core and said at least one first sheath having different refractive indexes, said at least one optical fiber further comprising an end for receiving polychromatic light,
   - a first grating with periodic longitudinal modulation of the refractive index of the optical fiber core, called first grating (R1), inscribed in the core of said at least one optical fiber and configured to reflect a wavelength $\lambda_1$ of the light, said wavelength $\lambda_1$ being shifted by a quantity $\Delta\lambda_{B1}$ with respect to a reference wavelength $\lambda_B$ and said quantity $\Delta\lambda_{B1}$ being sensitive to the temperature, to deformations and to the curvature of the optical fiber, **characterised in that** it further comprises at least one second grating with periodic longitudinal modulation of the refractive index of the optical fiber core, called second grating (R2), inscribed in the core of said at least one optical fiber and configured to reflect a wavelength $\lambda_2$ of the light, said wavelength $\lambda_2$ being shifted by a quantity $\Delta\lambda_{B2}$ with respect to said reference wavelength $\lambda_B$ and said quantity $\Delta\lambda_{B2}$ being sensitive to the temperature, to deformations and to the curvature of the optical fiber,
   - said first and second gratings being defined so that the quantities $\Delta\lambda_{B1}$ and $\Delta\lambda_{B2}$ have substantially identical sensitivities to temperature and to deformations and substantially opposite sensitivities to curvature.

2. Sensor according to claim 1, **characterised in that** it comprises a single optical fiber and **in that** the first and second gratings (R1, R2) are Bragg gratings inscribed one behind the other in the core of the optical fiber, said first and second gratings having different average effective indexes ($\delta n_{dc1}$, $\delta n_{dc2}$).

3. Sensor according to claim 1, **characterised in that** it comprises a single optical fiber and **in that** the first and second gratings (R1, R2) are inscribed one on top of the other, the first grating being a Bragg grating and the second grating being a long period grating, said first and second gratings having different average effective indexes ($\delta n_{dc1}$, $\delta n_{dc2}$) .

4. Sensor according to claim 3, **characterised in that** the optical fiber comprises a second sheath surrounding said first sheath, said second sheath having a refractive index less than the refractive index of the first sheath.

5. Sensor according to claim 1, **characterised in that** it comprises a single optical fiber and a plurality of Bragg gratings inscribed one behind the other in the core of the optical fiber, said plurality of Bragg gratings being arranged in such a way as to behave as the association of a Bragg grating and a long period grating.

6. Sensor according to claim 1, **characterised in that** it comprises first and second optical fibers in a resin bar having an axis of symmetry, the first and second gratings being inscribed respectively in said first and second optical fibers.

7. Sensor according to claim 6, **characterised in that** the first and second gratings (R1, R2) are arranged at substantially identical positions along said axis of symmetry and said first and second optical fibers are placed at equal distances from said axis of symmetry.

8. Sensor according to claim 6 or 7, **characterised in that** said first and second gratings (R1, R2) are Bragg gratings.

9. Sensor according to claim 6 or 7, **characterised in that** said first and second gratings (R1, R2) are long period gratings.

10. Device for measuring the curvature of a longitudinal element, **characterised in that** it comprises:

- a curvature sensor (11) according to any of claims 1 to 9, said at least one optical fiber of the curvature sensor being arranged along said element,
- a source of polychromatic light (10) for emitting light through said at least one optical fiber, and
- a circuit (12) for receiving the wavelengths $\lambda_1 = \lambda_B + \Delta\lambda_{B1}$ and $\lambda_2 = \lambda_B + \Delta\lambda_{B2}$ and determining the curvature of said element from said wavelengths.

# FIG.1 (Art antérieur)

# FIG.2

FIG.3

FIG.4            FIG.5

FIG.6

FIG.7

EP 3 433 575 B1

Source de lumière — 10

Coupleur — 13

11

détermination courbure — 12

FIG.8

14

## RÉFÉRENCES CITÉES DANS LA DESCRIPTION

**Documents brevets cités dans la description**

- WO 2013131197 A1
- US 2009297089 A1
- CN 201382777 Y
- US 2009290160 A1
- US 2003086647 A1
- US 2007156019 A1